# EUROPEAN PATENT APPLICATION

(11) **EP 4 785 799 A1**
(43) Date of publication of application: **05.08.2026**
(21) Application number: 25155393.9
(22) Date of filing: 31.01.2025
(51) Int. Cl.: A23B 7/148, B65D 88/74, F25D 11/00

(54) **AN ACTIVE CONTROLLED ATMOSPHERE SYSTEM**

(71) Applicant: Thermo King LLC, Minneapolis, MN 55420 (US)
(72) Inventor: FAÚNDEZ BARROSO, David, 08191 Barcelona (ES); FERRER BLAS, Miguel Angel, 08221 Terrassa (ES); STAVOVA, Petra, 26601 Beroun (CZ); KOHOUTEK, Tomá, 27351 Cerveny Ujezd (CZ); PURROY LOPEZ, Adrià, 25100 Lleida (ES)
(74) Representative: Haseltine Lake Kempner LLP

(57) **Abstract**

There is provided an active controlled atmosphere (CA) system for a transport container. The transport container includes a cargo storage space. The CA system comprises: a gas concentration sensor, a nitrogen source including an outlet configured for the introduction of nitrogen-containing gas into the cargo storage space, a fan operable to circulate the gas around the cargo storage space, and a controller. The controller is configured to operate the CA system in each of a first mode and a second mode, wherein, in both the first mode and the second mode the nitrogen source is operated to introduce nitrogen-containing gas through the outlet, and wherein, in the first mode, the fan is deactivated and, in the second mode, the fan is activated. The gas concentration sensor is positioned so that: in the first mode, nitrogen-containing gas that has been introduced through the outlet passes over the sensor so that the sensor provides a signal indicative of a concentration of a first gas introduced through the outlet; and, in the second mode, nitrogen-containing gas that has been introduced through the outlet is displaced away from the sensor by the fan so that the sensor is configured to provide a signal indicative of the concentration of the first gas in an ambient environment of the cargo storage space.

## Description

The present disclosure relates to an active controlled atmosphere (CA) system, a computer implemented method for operating the CA system and a computer readable medium having stored thereon computer executable instructions to cause a controller to perform the method.

### Background

Perishable goods, such as fruits and vegetables, are often transported over long distances in freight containers. Perishable goods also tend to respire aerobically during transport, consuming oxygen in the container. Controlled atmosphere systems are used in freight containers to regulate the composition of the atmosphere to control respiration of the goods and thereby control the natural ripening process as well as the resultant shelf-life of the goods. Controlled atmosphere systems are commonly combined with refrigeration systems, since ripening is typically suppressed at low temperatures.

Controlled atmosphere systems may use an air modifying component such as a gas exchange module. The air modifying component is used to reduce the amount of oxygen in air introduced into the container to slow aerobic respiration of perishable goods. Such systems may have a test mechanism for assessing the efficacy of the air modifying component. Typically, these test mechanisms use a control valve to bleed off some of the flow from the air modifying component for testing.

### Summary

In a first aspect of the invention, there is provided an active controlled atmosphere (CA) system for a transport container, the transport container including a cargo storage space, the CA system comprising:
a gas concentration sensor,
a nitrogen source including an outlet configured for the introduction of nitrogen-containing gas into the cargo storage space,

a fan operable to circulate the gas around the cargo storage space, and
   a controller;
   wherein the controller is configured to operate the CA system in each of a first mode and a second mode, wherein, in both the first mode and the second mode the nitrogen source is operated to introduce nitrogen-containing gas through the outlet, and
wherein, in the first mode, the fan is deactivated and, in the second mode, the fan is activated; and
   wherein the gas concentration sensor is positioned so that:
   in the first mode, nitrogen-containing gas that has been introduced through the outlet impinges the sensor so that the sensor provides a signal indicative of a concentration of a first gas in the nitrogen containing gas introduced through the outlet, and
   in the second mode, nitrogen-containing gas that has been introduced through the outlet is displaced away from the sensor by the fan so that the sensor is configured to provide a signal indicative of the concentration of the first gas in an ambient environment of the cargo storage space.

The outlet may be arranged to direct the nitrogen-containing gas toward the gas concentration sensor.

The outlet may face the sensor.

The sensor may be provided in a capsule, the capsule comprising a wall that at least partially surrounds a sensor area.

The outlet may face the sensor area.

The nitrogen source may comprise a pipe, the outlet being provided in an end of the pipe.

The sensor may be provided in an axial direction of the pipe.

The fan may be disposed in between the outlet and the sensor and is operable to displace nitrogen-containing gas introduced through the outlet in a direction perpendicular to the axial direction when the CA system is operated in the second mode.

The fan may be configured to circulate the nitrogen containing gas around the cargo storage space when the CA system is operated in the second mode.

The controller may be further configured to operate the CA system in a third mode of operation in which the nitrogen source is prevented from introducing nitrogen-containing gas through the outlet.

The controller may be configured to switch between the second mode of operation and the third mode of operation on receipt of a signal from the sensor indicative of the concentration of first gas in the ambient environment of the cargo storage space being less than a first set point limit.

The controller may be configured to switch between the third mode of operation and the second mode of operation on receipt of a signal from the sensor indicative of the concentration of the first gas in the ambient environment of the cargo storage space being greater than a second set point limit.

The first set point limit may be between 2% and 10% by mole fraction.

The second set point limit may be between 2% and 20% by mole fraction.

The first gas may be one of carbon dioxide, oxygen or both.

The nitrogen source may comprises a gas exchange module configured to separate nitrogen from ambient air introduced into the gas exchange module from outside the transport container.

The nitrogen-containing gas introduced though the outlet may comprise between 80% and 99% nitrogen by mole fraction.

In a second aspect of the invention, there is provided a computer implemented method for operating the active controlled atmosphere (CA) system of the first aspect, the method comprising:
operating the CA system in a first mode wherein the fan is deactivated and the nitrogen source is operated to introduce nitrogen-containing gas through the outlet into the cargo storage space; and
operating the CA system in a second mode wherein the fan is activated and the nitrogen source is operated to introduce nitrogen-containing gas through the outlet into the cargo storage space.

The method may further comprise, operating the CA system in a third mode of operation in which the nitrogen source is prevented from introducing nitrogen-containing gas through the outlet.

The method may further comprise, switching between the second mode of operation and the third mode of operation on receipt of a signal from the sensor indicative of the concentration of first gas in the ambient environment of the cargo storage space being less than the first set point limit.

The method may further comprise, switching between the third mode of operation and the second mode of operation on receipt of a signal from the sensor indicative of the concentration of the first gas in the ambient environment of the cargo storage space being greater than the second set point limit.

In a third aspect there is provided a computer readable medium having stored thereon computer executable instructions to cause a controller to perform the method of the second aspect.

In a fourth aspect there is provided a transport container including a cargo storage space, the transport container comprising the CA system of the first aspect.

### Brief Description of the Drawings

Fig. 1 is a schematic plan view of a cargo storage space including stored goods and an active controlled atmosphere (CA) system;
Fig. 2a is a detail view of components of the CA system operating in a first mode;
Fig. 2b is a detail view of components of the CA system operating in a second mode;
Fig. 3 is a detail view of one embodiment of the CA system;
Fig. 4 is a detail view of another embodiment of the CA system; and
Fig. 5 shows a controller implemented method of operating the CA system.

### Detailed Description

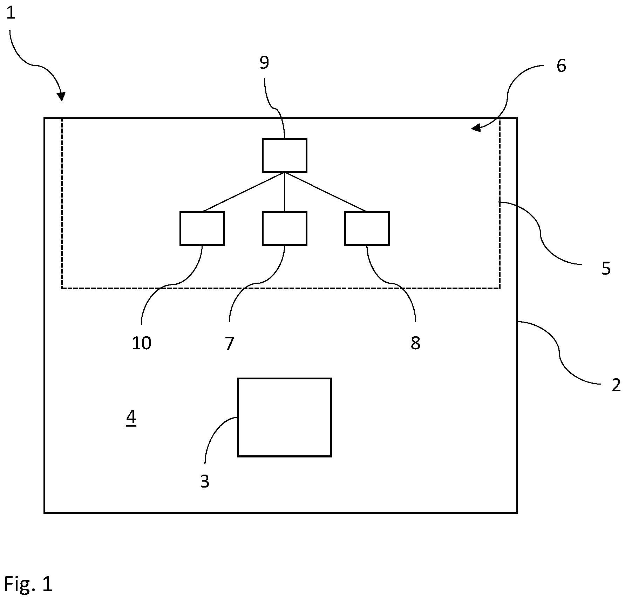

Fig. 1 schematically shows a transport container 1 comprising external walls 2 which separate an internal atmosphere of interior gas from an external atmosphere of exterior gas. By way of example, perishable goods 3 (such as a load of fresh fruit and/or vegetables) are provided in a cargo storage space 4 of the container.

A refrigeration module 5 is installed at one end of the container adjacent a wall 2 of the container. The refrigeration module 5 is in fluid communication with the interior of the cargo storage space 4 (as indicated by dashed line 5 demarcating the boundary of the refrigeration module 5) to permit exchange of gas between the cargo storage space 4 and the refrigeration module 5. The refrigeration module 5 includes a refrigeration circuit including an evaporator, a condenser and a compressor connected to one another via flow lines and an expansion valve so that, in use, the evaporator is configured to transfer heat from interior gas to circulating refrigerant and the condenser is configured to transfer heat from the refrigerant to exterior gas. For simplicity, the refrigeration components of the refrigeration module 5 are not shown in Fig. 1 .

The refrigeration module 5 also includes an active controlled atmosphere system 6. The controlled atmosphere system 6 includes a nitrogen source 8 operable to control a flow of nitrogen-containing gas from the controlled atmosphere system 6 into the cargo storage space. In this embodiment, the nitrogen source 8 is a gas exchange module 8. The gas exchange module 8 includes a compressor, a vent to the exterior of the container, a vent to the interior of the container, and a nitrogen (i.e. N2) gas separation membrane. The gas exchange module 8 is operable to supply ambient air (i.e. exterior gas from outside the container) or nitrogen-enriched gas to the interior of the container.

To supply nitrogen-enriched gas (also herein nitrogen-containing gas) to the interior of the container, the compressor is operated to pump exterior gas, derived from the vent to the exterior, and/or interior gas, derived from the vent to the interior, through the nitrogen gas separation membrane. The nitrogen gas separation membrane selectively permits transfer of nitrogen, in preference to oxygen (i.e. O2) or carbon dioxide (i.e. CO2), therethrough, such that nitrogen-enriched gas can be generated from an input of interior and/or exterior air and subsequently pumped into the cargo storage space 4.

It will be appreciated that, although in this embodiment of the invention the gas exchange module 8 makes use of a nitrogen gas separation membrane to produce a nitrogen-enriched gas, any other suitable method of supplying nitrogen to the cargo storage space, as known in the field, may be used. For example, the nitrogen source 8 may include a supply of stored nitrogen gas (e.g. canisters of compressed nitrogen gas). Alternatively, a VPSA - Vacuum Pressure Swing Absorption system may be used.

The controlled atmosphere system 6 also includes a control module 9 (also herein referred to as controller 9) operatively connected to the nitrogen source 8. The control module 9 is configured to control operation of the nitrogen source 8, as explained in more detail below.

The controlled atmosphere system 6 further includes a fan 7 operable to circulate the nitrogen containing gas around the cargo storage space 4. The control module 9 is operatively connected to the fan 7 and configured to control the fan 7 in accordance with different modes of operation, as explained in more detail below.

The controlled atmosphere system 6 further includes a sensor module 10. The sensor module 10 includes a gas concentration sensor 11. In this embodiment of the invention, the gas concentration sensor 11 is an oxygen concentration sensor 11 operable to measure the concentration of oxygen of gas passing over the sensor 11. The gas concentration sensor 11 may be of any type known in the field, such as an electrochemical gas sensor, an optical gas sensor (for example, infra-red gas sensors), or a partial pressure sensor operable to measure the partial pressure of a nominal gas (oxygen in this embodiment) passing over the sensor. The controller 9 is operatively connected to the sensor module 10 for receiving measurements of the levels of oxygen in gas passing over the oxygen concentration sensor 11. In this particular embodiment, the sensor module 10 generates a signal indicating the concentration of oxygen in the gas passing over the oxygen concentration sensor 11 for interpretation by the controller 9.

The composition of the interior gas in the cargo storage space 4 typically varies during transport of the goods 3 due to natural respiration of the goods 3. Before loading of the goods 3 into the container, the composition of the interior gas is typically the same as the composition of the exterior gas. In particular, the initial composition of the interior gas is typically the same as ambient air. Accordingly, the interior gas initially contains, by mole fraction, about 78 % nitrogen (N2), about 21 % oxygen (O2), about 0.9 % argon (Ar) and about 0.04 % carbon dioxide (CO2), the balance being made up of small quantities of other gases such as neon (Ne), helium (He) and methane (CH4).

During transport, the perishable goods 3 respire aerobically, consuming oxygen and producing carbon dioxide. This is part of a natural ripening process that reduces the freshness of the goods 3. To preserve freshness, it is therefore necessary to reduce the concentration of oxygen within the cargo storage space 4 to reduce the rate of aerobic respiration and slow ripening. In the embodiments of the invention, this is achieved by operating the gas exchange module 8 to reduce the amount of oxygen in the cargo storage space 4. During such operation of the gas exchange module 8, the compressor is operated to pump exterior gas, derived from the vent to the exterior, and/or interior gas, derived from the vent to the interior, through the nitrogen gas separation membrane. This selectively permits the transfer of nitrogen - in preference to oxygen (i.e. O2) - into the cargo storage space 4.

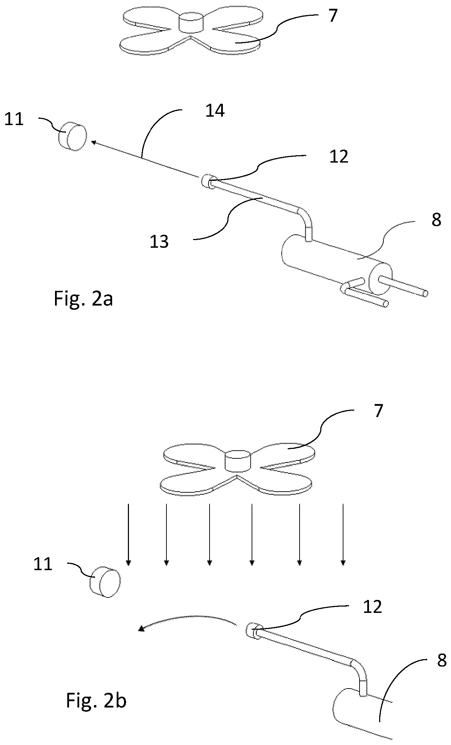

Figs 2a and 2b show the fan 7, nitrogen source 8 and gas concentration sensor 11 of the CA system 6 in more detail. The nitrogen source 8 is configured to introduce nitrogen containing gas into the cargo storage space through an outlet 12. In the illustrated example, the outlet 12 (which can be any suitable shape) is provided at the end of a section of straight pipe 13 to create a directed flow 14 toward the gas concentration sensor 11. By 'directed flow 14' it is meant that the flow travels in a predominantly axial direction of the pipe 13.

The controller is configured to operate the CA system 6 in each of a first and second mode of operation. In both the first and second modes, the nitrogen source 8 is operated to introduce nitrogen-containing gas through the outlet 12. In the first mode the fan 7 is deactivated, as shown in Fig. 2a, to allow the directed flow 14 of nitrogen containing gas to pass over the gas concentration sensor 11. In the second mode, the fan 7 is activated, as shown in Fig. 2b, to deflect the directed flow of nitrogen-containing gas away from the gas concentration sensor 11 and to draw gas from the ambient environment of the cargo storage space 4 over the gas concentration sensor 11. This means that, in the first mode, the gas concentration sensor 11 provides a signal indicating a gas concentration of the gas delivered through the outlet 12; while, in the second mode, the gas concentration sensor provides a signal indicating a gas concentration of gas from the ambient environment of the cargo storage space 4. In this embodiment, the gas concentration is an oxygen concentration, though it will be appreciated that if the gas-concentration sensor were a different gas concentration sensor (rather than oxygen concentration sensor 11) the measured gas concentration would be the concentration of that gas. In some embodiments, the gas concentration may be a carbon dioxide concentration. In some embodiments, the gas concentration may be a measurement of the concentration of both oxygen and carbon dioxide.

Using the signal indicating the oxygen concentration of the gas passing over the sensor 11, an understanding of the nitrogen concentration of the gas can be implicitly determined. To do this, the assumption is made that the gas is composed solely of nitrogen and oxygen. For the level of accuracy required, this is a reasonable assumption as the other constituent parts of air make up less than 1 % of the molar fraction. In other words, knowing the concentration of oxygen, it can be assumed that the remaining volume of gas is made up of nitrogen (i.e. the remaining molar fraction is nitrogen).

In an embodiment, the controller 9 may be configured to calculate the nitrogen level on receipt of the signal from the sensor module 10 indicating the concentration of oxygen passing over the oxygen concentration sensor 11. Therefore, the controller 9 may determine the concentration of nitrogen in the gas passing over the oxygen concentration sensor 11. In this way, it can be said that the signal provided by the oxygen concentration sensor 11 is indicative of the nitrogen concentration of the gas passing over the sensor 11, as the nitrogen concentration can be derived by the controller 9 from the signal. It will be appreciated, however, that such a calculation is not essential and that simply determining the oxygen level in the gas passing over the oxygen concentration sensor 11 allows for an implicit determination to be made about the nature of the gas passing over the sensor 11.

For greater accuracy, the sensor module 10 can be further provided with a carbon dioxide concentration sensor (not illustrated) operatively connected to the controller 9. In such an embodiment, the carbon dioxide sensor would provide a signal to the controller 9 indicating the concentration of carbon dioxide in the gas passing over the sensor 11. As the perishable goods 3 produce carbon dioxide as they respire, the carbon dioxide levels inside the cargo storage space 4 will increase over time. By combining the measurement of the oxygen concentration in the ambient environment of the cargo storage space 4 with a measurement of the carbon dioxide concentration, a more accurate assessment of the ambient environment can be obtained.

As stated above, in the first mode of operation, the gas passing over the sensor is the gas from the outlet 12 of the nitrogen source 8. Therefore, in the first mode of operation, the nitrogen concentration of the gas from the outlet can be calculated by the controller 9. This is beneficial as it allows for the determination that the nitrogen source 8 is operating correctly. For example, in the present embodiment, the level of efficacy of the nitrogen gas exchange membrane can be determined. If the level of nitrogen in the gas passing over the sensor 11 is determined to be below a test threshold amount (i.e the level of oxygen or carbon dioxide in the gas leaving the outlet 12 is below an acceptable amount), the controller 9 can be further configured to provide an alert to a user of the CA system 6 indicating that a repair or overhaul of the nitrogen source 8 is required. In this way, the first mode functions as a test cycle in which the efficacy of the nitrogen source 8 can be determined.

The nitrogen concentration of the gas introduced through the outlet 12 may depend on the operating conditions of the gas exchange module. The test threshold is predetermined for the operating conditions of the gas exchange module 8 set for the first mode of operation. The test threshold may be set at or below the expected nitrogen concentration for gas delivered for a properly functioning gas exchange module 8. In either the first or second mode of operation, the nitrogen-containing gas introduced though the outlet 12 may comprise between 80% and 99% by mole fraction, such as greater than 85% nitrogen by mole fraction, or greater than 90% by mole fraction, or 95% by mole fraction.

In the second mode of operation, the gas passing over the sensor 11 is the ambient air within the cargo storage space 4, as drawn in by the fan 7. The gas from the outlet 12 is deflected by the fan before it reaches the sensor module 10 and is instead mixed into the ambient air. In the second mode of operation, it is possible to determine a changing concentration of the ambient air as nitrogen-enriched gas is introduced through the outlet 12. This means that the second mode functions as a nitrogen top up cycle, in which nitrogen-enriched gas is continuously introduced through the outlet 12 while the concentration of a gas in the ambient air is measured by the sensor 11. When the controller 9 determines that the oxygen concentration in the ambient air is below a first set point limit it may bring the second mode of operation to an end. The first set point limit may be between 2% and 10% oxygen by mole fraction (or carbon dioxide if a carbon dioxide concentration sensor is used).

The controller 9 may be further configured to operate the CA system 6 in a third mode of operation in which the nitrogen source 8 is prevented from introducing nitrogen-containing gas through the outlet 12. The controller 9 may be configured to switch between the second mode of operation and the third mode of operation on receipt of a signal from the sensor indicating that oxygen (or carbon dioxide) concentration of the ambient environment of the cargo storage space is less than the first set point limit.. The controller 9 may be further configured to switch between the third mode of operation and the second mode of operation on receipt of a signal from the sensor 11 indicating that the oxygen (or carbon dioxide) concentration of the ambient environment of the cargo storage space 4 has increased above a second set point limit. The second set point limit may be between 2% and 20% oxygen by mole fraction (or carbon dioxide if a carbon dioxide concentration sensor is used).

In the third mode of operation the fan 7 may be operated to circulate air from the refrigeration module 5 around the cargo storage space 4. In this way, the fan 7 serves both to distribute nitrogen-containing gas around the cargo storage space 4 (i.e. in the second mode of operation) and to distribute air conditioned by the refrigeration module 5 around the cargo storage space 4 (i.e. in third mode of operation and, optionally, in the second mode of operation). The third mode of operation may therefore function as a cargo storage space 4 air conditioning cycle.

Beneficially, the position of the fan 7 in the present invention enables a single outlet 12 and sensor module 10 to be used in both the first and second mode of operation. It will be appreciated that, without the fan 7 positioned to displace the gas introduced through the outlet 12, it would be necessary to have a second outlet to introduce nitrogen containing gas into the cargo storage compartment 4 that is not directed toward the sensor module for it to accurately determine the composition of ambient air during a nitrogen top up cycle. Alternatively, a single outlet could be used to introduce nitrogen-enriched gas into the cargo storage space 4, but a second sensor would be required (i.e. one that is not in fluid communication with the cargo storage space) to determine the efficacy of the nitrogen source in a test mode. Therefore, the present invention presents a mechanically optimised solution in which a test mode and a nitrogen top up cycle can be supported with the minimum complexity and number of components.

The fan may be disposed in between the outlet 12 and the sensor 11 and be operable to displace gas introduced through the outlet 12 in a direction perpendicular to the axial direction of the pipe 13 in the second mode. In this way, the gas introduced through the outlet 12 is efficiently prevented from passing over the sensor 11. The fan 7 may be specified with sufficient power to circulate the gas around the cargo storage space 4 or, alternatively, an additional fan 7 may be provided for that purpose.

Any suitable frame, bracket or housing may be used to fix the fan 7, gas concentration sensor 11 and the nitrogen source 8 together, thereby forming the CA system 6. Therefore, CA system 6 may be simply installed or removed from the refrigeration module 5 without having to separately remove each of the components of the CA system 6. Alternatively, the frame, bracket or housing may be part of the refrigeration module 5 itself, with each of the fan 7, sensor 11 and nitrogen source 8 being separately attachable to the refrigeration module 5.

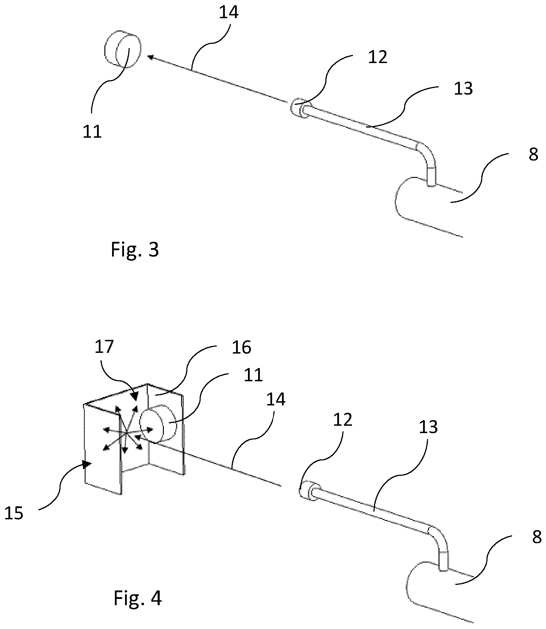

As discussed, an important aspect of the CA system 6 is the position of the fan 7 relative to the sensor 11 and the outlet 12. In one embodiment, the outlet 12 may face the sensor as shown in Fig. 3. By 'face the sensor' it is meant that the outlet 12 is directed toward the sensor 11. This means that the directed gas flow 14 from the outlet 12 travels directly toward the sensor 11. To further this effect, the sensor 11 may be provided in an axial direction of the pipe 13. The length of the pipe 13 as well as the distance of the sensor 11 from the outlet 12 of the pipe 13 can vary a lot depending on system size and dimensions.

As shown in Fig. 4, the sensor 11 may be provided in a capsule 15. In the illustrated embodiment the capsule 15 comprises a wall 16 that at least partially surrounds a sensor area 17. The wall 16 is U shaped, thereby enclosing the sensor area 17 on three sides. An open side 18 of the sensor area 17 faces the outlet 12 so that gas leaving the outlet 12 passes into the sensor area 17, impinging a section of the wall 16 behind the open side 18. The sensor 11 may be mounted on the section of wall 16 behind the open side 18 or, as illustrated, may be mounted on a part of the wall 16 perpendicular to the open side 18. In this embodiment, the outlet 12 does not need to face the sensor 11 itself if it faces part of the wall that surrounds the sensor 11. The gas introduced through the outlet 12 collects within the capsule and diffuses outward, passing over the sensor 11. Regardless of the part of the wall 16 to which the sensor 11 is mounted, the capsule 15 serves to slow the flow of gas passing over the sensor 11, which may allow the use of a sensor 11 of lower sensitivity or power. In an unillustrated embodiment, the capsule 15 walls are perforated to enable smooth and optimized air distribution in case of very strong airflow and fan 7 power.

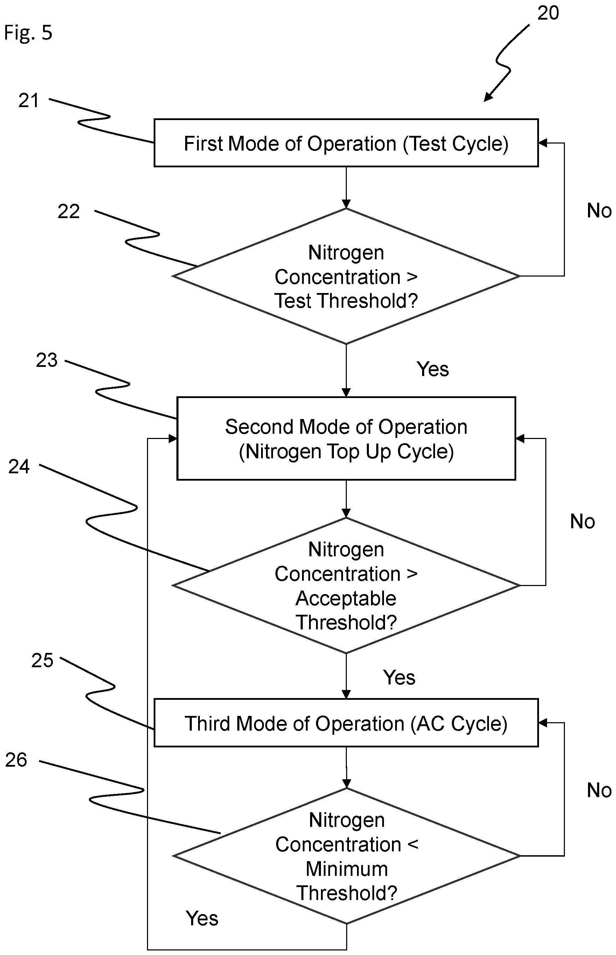

Fig. 5 shows the steps of a controller 9 implemented method for operating the CA system 6. The method comprises: operating 20 the CA system 6 in the first mode; determining 21 if the nitrogen concentration of the gas introduced through the outlet 12 is greater than the test threshold; and, if the nitrogen concentration of the gas introduced through the outlet 12 is greater than the test threshold, operating 23 the CA system in the second mode; determining 24 if the oxygen (or carbon dioxide) concentration of the ambient environment of the cargo storage space 4 is less than the first set point limit; and, if the oxygen (or carbon dioxide)concentration of the ambient environment is less than the first set point limit, operating 25 the CA system in the third mode.

Determining 21 if the nitrogen concentration of the gas introduced through the outlet 12 is greater than the test threshold may comprise determining that a concentration of either oxygen or carbon dioxide in the gas leaving the outlet 12 is below an acceptable amount. The acceptable amount may be between 1% and 20% by mole fraction, such as less than 10% or less than 5%.

The method may further comprise, determining 26 if the oxygen (or carbon dioxide) concentration of the ambient environment of the cargo storage space 4 is greater than the second set point limit; and, if the oxygen (or carbon dioxide) concentration of the ambient environment is greater than the second set point limit; operating 23 the CA system 6 in the second mode of operation.

## Claims

1. An active controlled atmosphere (CA) system (6) for a transport container, the transport container including a cargo storage space, the CA system comprising:
a gas concentration sensor (11),
a nitrogen source (8) including an outlet (12) configured for the introduction of nitrogen-containing gas into the cargo storage space,
a fan (7) operable to circulate the gas around the cargo storage space, and
a controller (9);
wherein the controller is configured to operate the CA system in each of a first mode and a second mode, wherein, in both the first mode and the second mode the nitrogen source is operated to introduce nitrogen-containing gas through the outlet, and wherein, in the first mode, the fan is deactivated and, in the second mode, the fan is activated; and
wherein the gas concentration sensor is positioned so that:
in the first mode, nitrogen-containing gas that has been introduced through the outlet passes over the sensor so that the sensor provides a signal indicative of a concentration of a first gas in the nitrogen containing gas introduced through the outlet, and
in the second mode, nitrogen-containing gas that has been introduced through the outlet is displaced away from the sensor by the fan so that the sensor is configured to provide a signal indicative of the concentration of the first gas in an ambient environment of the cargo storage space.

2. The system of claim 1, wherein the outlet is arranged to direct the nitrogen-containing gas toward the gas concentration sensor.

3. The system of claim 2, wherein the outlet faces the sensor.

4. The system of claim 2, wherein the sensor is provided in a capsule (15), the capsule comprising a wall (16) that at least partially surrounds a sensor area (17).

5. The system of claim 4, wherein the outlet faces the sensor area.

6. The system of any preceding claim, wherein the nitrogen source comprises a pipe (13), the outlet being provided in an end of the pipe.

7. The system of claim 6, wherein the sensor is provided in an axial direction of the pipe.

8. The system of claim 7, wherein the fan is disposed in between the outlet and the sensor and is operable to displace nitrogen-containing gas introduced through the outlet in a direction perpendicular to the axial direction when the CA system is operated in the second mode.

9. The system of any preceding claim, wherein the fan is configured to circulate the nitrogen containing gas around the cargo storage space when the CA system is operated in the second mode.

10. The system of claim of any preceding claim, wherein the controller is configured to operate the CA system in a third mode of operation in which the nitrogen source is prevented from introducing nitrogen-containing gas through the outlet.

11. The system of claim 10, wherein the controller is configured to switch between the second mode of operation and the third mode of operation on receipt of a signal from the sensor indicative of the concentration of the first gas in the ambient environment of the cargo storage space being less than a first set point limit; and
optionally, wherein the controller is configured to switch between the third mode of operation and the second mode of operation on receipt of a signal from the sensor indicative of the concentration of the first gas in the ambient environment of the cargo storage space being greater than a second set point limit; and
optionally, wherein the first set point limit is between 2% and 10% by mole fraction and the second set point limit is between 2% and 20% by mole fraction; and
optionally, wherein the first gas is one of carbon dioxide, oxygen or both.

12. The system of any preceding claim, wherein the nitrogen source comprises a gas exchange module configured to separate nitrogen from ambient air introduced into the gas exchange module from outside the transport container.

13. The system of any preceding claim, wherein the nitrogen-containing gas introduced though the outlet comprises between 80% and 99% nitrogen by mole fraction.

14. A computer implemented method for operating the active controlled atmosphere (CA) system of any of claims 1 to 13, the method comprising:
operating (21) the CA system in a first mode wherein the fan is deactivated and the nitrogen source is operated to introduce nitrogen-containing gas through the outlet into the cargo storage space; and
operating (23) the CA system in a second mode wherein the fan is activated and the nitrogen source is operated to introduce nitrogen-containing gas through the outlet into the cargo storage space.

15. A transport container (1) including a cargo storage space (4), the transport container comprising the CA system of any of claims 1 to 13.

## Amended claims

### Amended claims in accordance with Rule 137(2) EPC.

1. An active controlled atmosphere (CA) system (6) for a transport container, the transport container including a cargo storage space, the CA system comprising:
a gas concentration sensor (11),
a nitrogen source (8) including an outlet (12) configured for the introduction of nitrogen-containing gas into the cargo storage space, the outlet being arranged to direct the nitrogen-containing gas toward the gas concentration sensor,
a fan (7) operable to circulate the gas around the cargo storage space, and
a controller (9);
wherein the controller is configured to operate the CA system in each of a first mode and a second mode, wherein, in both the first mode and the second mode the nitrogen source is operated to introduce nitrogen-containing gas through the outlet, and wherein, in the first mode, the fan is deactivated and, in the second mode, the fan is activated; and
wherein the gas concentration sensor is positioned so that:
in the first mode, nitrogen-containing gas that has been introduced through the outlet passes over the sensor so that the sensor provides a signal indicative of a concentration of a first gas in the nitrogen containing gas introduced through the outlet, and
in the second mode, nitrogen-containing gas that has been introduced through the outlet is displaced away from the sensor by the fan so that the sensor is configured to provide a signal indicative of the concentration of the first gas in an ambient environment of the cargo storage space.

2. The system of claim 1, wherein the outlet faces the sensor.

3. The system of claim 1, wherein the sensor is provided in a capsule (15), the capsule comprising a wall (16) that at least partially surrounds a sensor area (17).

4. The system of claim 3, wherein the outlet faces the sensor area.

5. The system of any preceding claim, wherein the nitrogen source comprises a pipe (13), the outlet being provided in an end of the pipe.

6. The system of claim 5, wherein the sensor is provided in an axial direction of the pipe.

7. The system of claim 6, wherein the fan is disposed in between the outlet and the sensor and is operable to displace nitrogen-containing gas introduced through the outlet in a direction perpendicular to the axial direction when the CA system is operated in the second mode.

8. The system of any preceding claim, wherein the fan is configured to circulate the nitrogen containing gas around the cargo storage space when the CA system is operated in the second mode.

9. The system of claim of any preceding claim, wherein the controller is configured to operate the CA system in a third mode of operation in which the nitrogen source is prevented from introducing nitrogen-containing gas through the outlet.

10. The system of claim 9, wherein the controller is configured to switch between the second mode of operation and the third mode of operation on receipt of a signal from the sensor indicative of the concentration of the first gas in the ambient environment of the cargo storage space being less than a first set point limit; and
optionally, wherein the controller is configured to switch between the third mode of operation and the second mode of operation on receipt of a signal from the sensor indicative of the concentration of the first gas in the ambient environment of the cargo storage space being greater than a second set point limit; and
optionally, wherein the first set point limit is between 2% and 10% by mole fraction and the second set point limit is between 2% and 20% by mole fraction; and
optionally, wherein the first gas is one of carbon dioxide, oxygen or both.

11. The system of any preceding claim, wherein the nitrogen source comprises a gas exchange module configured to separate nitrogen from ambient air introduced into the gas exchange module from outside the transport container.

12. The system of any preceding claim, wherein the nitrogen-containing gas introduced though the outlet comprises between 80% and 99% nitrogen by mole fraction.

13. A computer implemented method for operating the active controlled atmosphere (CA) system of any of claims 1 to 12, the method comprising:
operating (21) the CA system in a first mode wherein the fan is deactivated and the nitrogen source is operated to introduce nitrogen-containing gas through the outlet into the cargo storage space; and
operating (23) the CA system in a second mode wherein the fan is activated and the nitrogen source is operated to introduce nitrogen-containing gas through the outlet into the cargo storage space.

14. A transport container (1) including a cargo storage space (4), the transport container comprising the CA system of any of claims 1 to 12.

15. A computer readable medium having stored thereon computer executable instructions to cause the controller (9) of the system (6) of claims 1 to 12 to perform the method of claim 13.
